# FASCICULE DE BREVET EUROPEEN

(11) **EP 4 004 424 B1**
(45) Date de publication et mention de la délivrance du brevet: **19.02.2025**
(21) Numéro de dépôt: 20753996.6
(22) Date de dépôt: 17.07.2020
(51) Int. Cl.: F16L 59/12, F16L 55/033, F16L 59/075, B32B 1/08, B32B 3/30, B32B 5/02, B32B 5/14, F16L 59/02, F16L 59/04, F16L 59/14, F16L 59/08

(54) **STRUCTURE ISOLANTE POUR CONDUITE DE FLUIDE**
ISOLIERSTRUKTUR FÜR EIN FLÜSSIGKEITSROHR
INSULATING STRUCTURE FOR A FLUID PIPE

(30) Priorité: 25.07.2019 FR 1908483
(43) Date de publication de la demande: 01.06.2022
(73) Titulaire: SAINT-GOBAIN ISOVER, 92400 Courbevoie (FR)
(72) Inventeur: JACQUS, Gary, 93303 AUBERVILLIERS (FR)
(74) Mandataire: Ex Materia
(86) Numéro de dépôt international: PCT/FR2020/051300
(87) Numéro de publication internationale: WO 2021/014084

(56) Documents cités:
- EP-A1- 0 828 965
- DE-U- 1 875 813
- JP-A- H04 248 098

## Description

La présente invention concerne une structure thermiquement et acoustiquement isolante pour conduite de fluide.

L'invention se rapporte au domaine de l'isolation thermique et acoustique de conduite dans les bâtiments, ou de conduite utilisée dans un cadre industriel.

Une structure isolante pour conduite est généralement constituée d'une matière isolante, telle que la laine de roche ou la laine de verre. La souplesse de ce type de matière facilite une disposition par enroulement autour de la conduite que l'on souhaite isoler, et assure une isolation thermique et/ou acoustique une fois la structure isolante mise en place.

Cette structure isolante est maintenue autour de la conduite par de la matière adhésive.

Des fluides à températures variables, dont l'écart de température peut s'avérer conséquent, peuvent circuler au coeur de certaines de ces conduites. Ainsi l'écart de température très élevé amène à utiliser des conduites métalliques pouvant résister dans le temps à des températures très élevées ou très faibles, et aux contraintes mécaniques que ces écarts de température imposent. Une telle conduite nécessite donc une isolation thermique avec une structure isolante telle que mentionnée précédemment. Cette structure isolante est enroulée autour de la conduite et engendre un contact direct entre la face externe de la conduite et la matière isolante de la structure isolante, et ce sur toute la circonférence de la conduite.

Le problème technique découlant de ce type d'installation est qu'il est courant de voir apparaître des phénomènes de condensation au niveau de la surface de la conduite, la température des fluides circulant dans la conduite pouvant varier de manière extrême. L'eau produite suite à cette condensation est alors absorbée par la matière isolante de la structure isolante, et l'humidité engendrée provoque une corrosion prématurée de la conduite métallique. Cette corrosion est amplifiée par le fait que la structure thermiquement isolante de l'art antérieur se comporte comme une éponge qui maintient constamment la face externe de la conduite dans un milieu humide, et favorise ainsi la corrosion sur des périodes assez longues.

Un autre problème technique découlant de l'art antérieur est l'isolation acoustique de la conduite. En effet, lorsque la structure isolante est directement au contact de la conduite, la transmission solidienne, c'est-à-dire la transmission des sons produits par le fluide contre la conduite à travers la matière de la structure isolante, est alors maximale. L'isolation acoustique de la conduite est donc fortement dépendante des propriétés de la structure isolante employée.

Des solutions existent au sein de l'art antérieur, dont la majeure partie se rapporte au domaine des conduits de cheminée. Il s'agit de conduits munis d'une structure en matière isolante comprenant des entretoises. Ces entretoises sont les seules parties de la structure à être en contact direct avec le conduit de cheminée, créant ainsi un intervalle entre le conduit et la paroi interne de la structure où l'air peut circuler.

Cette solution ne donne cependant pas entièrement satisfaction. En effet, les excroissances sont faites de la même matière que la structure isolante, c'est-à-dire en laine de roche ou en laine de verre, et elles sont par conséquent compressibles. Cela entraîne donc avec le temps une compression irréversible des excroissances, qui amène à un nouveau point de contact entre la conduite et la structure isolante et qui sur le long terme ne règle donc ni le problème de corrosion engendrée par la condensation, ni le problème d'isolation acoustique de la conduite, cette dernière étant directement au contact de la structure isolante.

Par ailleurs, ces solutions sont adaptées pour les conduits de cheminée, où seuls des gaz chauds circulent. Il n'y a pas de passage de liquides ou gaz froids, et donc pas de phénomène de condensation. Cette solution technique de l'art antérieur ne concerne donc pas spécifiquement l'un des problèmes techniques envisagés et n'a pas la prétention de le résoudre.

Le document DE1875813U divulgue une gaine isolante.

En revanche, la présente invention permet de résoudre le problème technique de corrosion des conduites métalliques due à la condensation, tout en isolant la conduite thermiquement et acoustiquement.

L'invention consiste en une structure thermiquement et acoustiquement isolante cylindrique configurée pour couvrir une conduite de transport d'un fluide susceptible d'être porté à des températures variables, selon la revendication 1. La structure isolante comprend une paroi interne et une paroi externe, ladite structure isolante comprenant au moins une excroissance qui émerge de sa paroi interne de sorte à générer un espace d'air entre la paroi interne et la conduite, caractérisée en ce que la paroi interne de la structure isolante qui délimite au moins partiellement l'excroissance est plus dense que la paroi externe de la structure isolante. La densification de l'excroissance issue de la paroi interne assure une résistance à la déformation de l'excroissance.

La résistance à la déformation est augmentée par la densification de l'excroissance. L'excroissance permet ainsi la conservation de l'espace d'air entre la conduite et la structure isolante durant une période déterminée, par exemple d'une à quatre années à partir de l'installation de la structure isolante autour de la conduite.

Dans le présent document, on utilisera le terme structure isolante pour désigner cette pièce assurant une isolation thermique et acoustique. La forme cylindrique de la structure isolante assure le recouvrement de la conduite et donc l'isolation de cette dernière. Afin d'envelopper la conduite dans sa totalité, la structure isolante présente un diamètre, dans laquelle s'inscrit majoritairement la paroi interne, supérieur au diamètre de la conduite.

La paroi interne de la structure isolante présente au moins une excroissance assurant d'une part le contact entre la structure isolante et la conduite, et d'autre part la création d'un espace entre la paroi interne de la structure isolante et la face externe de la conduite. Autrement dit, ce n'est pas l'ensemble de la paroi interne de la structure isolante qui est directement en contact avec la conduite, les seuls points de contact entre les deux éléments étant la ou les excroissances qui émergent de la paroi interne de la structure isolante.

La paroi externe est la partie de la structure isolante la plus éloignée radialement de la conduite que l'invention propose d'isoler. La comparaison de densité entre paroi interne et paroi externe peut être réalisée selon une épaisseur identique de ces parois.

La structure isolante est fabriquée notamment par pressage à chaud autour d'un mandrin, permettant ainsi la création et la densification de l'excroissance issue de la paroi interne. A titre d'exemple, la matière composant la structure isolante peut être pressée sur le mandrin, ce dernier présentant une forme particulière ou comprenant des contreformes correspondantes aux formes souhaitées de la structure isolante. Afin d'obtenir la densification de la paroi interne et de l'excroissance, le mandrin est chauffé par exemple par le biais d'un faisceau de résistances placé sur le mandrin et/ou par le biais de micro-ondes. Le chauffage du mandrin permet donc de densifier la paroi interne au niveau de l'excroissance, en consolidant la matière composant la structure isolante de sorte à former une couche où ladite matière et la colle sont fondues et compressées par le passage dans la machine de pressage équipée du mandrin chauffé. Par densification de la matière, il faut comprendre que la matière subit un durcissement consécutif au pressage de celle-ci contre le mandrin chaud, l'excroissance pouvant être pressée dans sa contreforme selon le procédé de fabrication exposé plus en détails par la suite.

Ainsi, le pressage est réalisé de telle sorte que seule la paroi interne délimitant au moins partiellement l'excroissance est densifiée. Autrement dit, une portion de la paroi interne radialement située entre les excroissances peut être dépourvue de densification de matière. Néanmoins et de manière alternative, une telle portion peut être densifiée de manière identique ou similaire à l'excroissance de manière similaire à ce qui a été décrit précédemment. La densification assure une résistance à la déformation de l'excroissance, éventuellement de la paroi interne située entre deux excroissances, permettant ainsi la conservation de l'espace d'air entre la conduite et la structure isolante, circonférentiellement de part et d'autre de l'excroissance. S'il y a au moins deux excroissances sur la paroi interne de la structure isolante, chacune de ces excroissances est densifiée telle qu'envisagée par l'invention. Par densification de l'excroissance, il faut comprendre que seule la paroi de l'excroissance, soit la matière directement en contact avec le mandrin lors du pressage est densifiée, un coeur de l'excroissance demeurant souple malgré un tel procédé de fabrication. Le fait de conserver une certaine souplesse du coeur de l'excroissance permet une meilleure isolation acoustique.

La densification de couche de la paroi interne peut par exemple être démontrée grâce à un test de masse volumique apparente selon la norme EN 1602. La mesure de la masse volumique selon cette norme consiste à mesurer les matières à tester pour en déduire leur volume par calcul, puis de peser ces mêmes matières pour en déduire la masse. La masse volumique de chacune de ces matières est ainsi obtenue en calculant le rapport entre la masse pesée et le volume calculé. Une fois la valeur de la masse volumique obtenue, il ne reste plus qu'à calculer le rapport entre cette valeur et celle de la masse volumique de l'eau pour obtenir la densité de la matière. Plus la valeur de densité est élevée, plus la matière est dense. Deux mesures sont effectuées : une mesure au niveau de la paroi interne délimitant au moins partiellement l'excroissance, et une mesure sur la paroi externe de la structure isolante, c'est-à-dire une zone de la structure isolante ne présentant pas de densification de matière.

Après test des deux zones mesurées, l'invention est reconnaissable quand la densité de la paroi interne délimitant au moins partiellement l'excroissance est plus élevée que la densité d'une quelconque autre portion de la structure isolante, notamment sa paroi externe. Un tel test peut être effectué à tout moment une fois la structure isolante fabriquée, avantageusement avant la pose de cette dernière autour de la conduite.

L'espace d'air ainsi formé par la structure isolante garantit une meilleure résistance de la conduite à la corrosion. Le fluide circulant dans la conduite présente des températures variables au cours du temps.

L'espace d'air, ainsi que la densification de matière pallient le problème lié à la condensation, empêchant ainsi l'absorption de l'humidité par la matière isolante. L'espace d'air peut par ailleurs être balayé par une circulation d'air, réduisant encore plus la formation de condensation sur la face externe de la conduite.

L'espace d'air garantit également une meilleure isolation acoustique de la conduite. En effet, il a été démontré qu'en formant un tel espace d'air, la transmission solidienne à travers la structure isolante est amoindrie par rapport à une structure isolante directement en contact avec la conduite. Pour confirmer cela, un test d'isolation acoustique a été effectué selon la norme ISO 15665. A l'issue de ce test, il est apparu que la perte d'insertion des sons provenant de la conduite est globalement plus élevée lorsque l'espace d'air est créé entre la conduite et la structure isolante que lorsque ces dernières sont directement en contact l'une contre l'autre, et ce malgré le test sur une pluralité de structures isolantes aux caractéristiques différentes. Cette augmentation de la perte d'insertion caractérise une meilleure isolation acoustique. Les résultats du test d'isolation acoustique sont présentés plus en détail par la suite.

Selon une caractéristique de l'invention, la structure isolante peut comprendre au moins deux excroissances. Le fait d'avoir plus d'une excroissance sur la structure isolante permet de centrer la structure isolante autour de la conduite, et ainsi d'avoir un espace d'air au niveau de l'ensemble de la circonférence de la conduite, bien entendu à l'exception des zones de contact direct entre les excroissances et la conduite. D'une manière avantageuse, la structure isolante comprend au moins trois excroissances, et ce afin d'assurer un positionnement optimal et équilibré de la structure isolante autour de la conduite.

Selon une caractéristique de l'invention, une épaisseur de la paroi interne mesurée au niveau de l'excroissance est comprise entre 0,1 mm et 5 mm. Cette épaisseur est celle où la densité de la paroi interne au niveau de l'excroissance est supérieure à une densité de de la paroi externe au niveau de son épaisseur. L'épaisseur de la paroi interne est susceptible de varier selon la zone mesurée, mais demeure entre 0,1 mm et 5 mm. Une telle épaisseur de la paroi interne peut être retrouvée au niveau de l'ensemble de la paroi interne ou bien uniquement au niveau des excroissances, en tout ou partie de ces excroissances.

Selon une caractéristique de l'invention, la densité de la paroi externe de la structure isolante est d'une valeur relative comprise entre 40% et 70% de la valeur de la densité de la paroi interne de la structure isolante au niveau de l'excroissance. Cet écart relatif de valeur de densité entre la paroi interne au niveau des excroissances et la paroi externe a été mesuré selon la norme EN 1602 tel que présentée précédemment.

La matière isolante qui compose la structure isolante est de la laine minérale. La laine minérale peut par exemple être de la laine de verre ou de la laine de roche. La laine de verre offre une isolation thermique et acoustique adaptée aux conduites de fluide pouvant atteindre des températures extrêmes. La laine de roche est une matière isolante présentant la caractéristique d'offrir une meilleure résistance à l'humidité que la laine de verre. Les deux matières offrent une isolation thermique et acoustique sensiblement similaire l'une par rapport à l'autre. Ainsi, dans la situation où la conduite est située dans une zone où l'humidité est présente en grande quantité, il est plus judicieux d'utiliser de la laine de roche. Si ce n'est pas le cas, la laine de verre peut être préférée.

L'excroissance qui émerge de la paroi interne est bombée en direction de l'axe de révolution du cylindre formé par la structure isolante. L'excroissance de la paroi interne de la structure isolante est de forme arrondie, c'est-à-dire dépourvue d'angles vifs. Une telle caractéristique permet de limiter le contact entre la structure d'isolation et la conduite à une ligne de contact formée par une extrémité libre de l'excroissance.

L'excroissance est bombée en direction de l'axe de révolution du cylindre formé par la structure isolante, c'est-à-dire en direction de la conduite lorsque la structure isolante est mise en place autour de celle-ci. Selon d'autres modes de réalisation, l'excroissance peut prendre d'autres formes particulières, par exemple une forme polygonale.

L'excroissance peut s'étendre de manière longitudinale sur toute une longueur de la structure isolante ou bien présenter des discontinuités en fonction des contreformes du mandrin. Ainsi, lors du pressage de la structure isolante, l'excroissance est formée et densifiée de manière linéaire continue, de manière linéaire discontinue, ou de manière ponctuelle, l'essentiel étant que l'espace d'air formé lors de la pose de la structure isolante autour de la conduite soit présent sur toute ou partie de la longueur de cette dernière. Dans le plan longitudinal, l'excroissance présente alors une forme globale de demi-cylindre.

L'excroissance peut s'étendre le long d'une droite rectiligne. Dans un tel cas, cette droite est parallèle à l'axe de révolution de la structure isolante.

De manière alternative, l'excroissance peut suivre une courbe qui s'enroule autour de l'axe de révolution de la structure isolante. L'excroissance s'étend alors de manière hélicoïdale.

La structure isolante peut comprendre une pluralité d'excroissances qui émergent de la paroi interne, les excroissances étant réparties angulairement de manière régulière. Les excroissances sont présentes de manière ponctuelle circonférentiellement autour de la paroi interne de la structure isolante, par exemple à égal secteur angulaire les unes des autres. Les portions de la paroi interne de la structure isolante ne présentant pas d'excroissances ne sont pas en contact avec la paroi externe de la conduite. Il y a donc un volume vide entre ces portions et la conduite permettant la création de l'espace d'air.

Selon une forme avantageuse de l'invention, la paroi externe est recouverte d'une couche d'un matériau étanche. La couche de matériau recouvrant la paroi externe assure une protection et/ou une étanchéité de la structure isolante face à toutes déperdition thermiques ou toutes dégradations provenant de l'environnement extérieur. La structure isolante est ainsi protégée et est maintenue en état de fonctionnement sur le long terme.

La couche de matériau étanche de la paroi externe est par exemple une feuille métallique. La feuille métallique est idéalement en aluminium ou un alliage à base d'aluminium, car l'aluminium a des propriétés d'étanchéité et de malléabilité, et ce même à très faible épaisseur.

L'invention couvre également un procédé de fabrication d'une structure thermiquement et acoustiquement isolante telle que décrite précédemment, comprenant :
- une étape d'enroulement d'un tronçon de matière isolante autour d'un mandrin présentant des contreformes,
- une étape de chauffage de la matière par le mandrin,
- une étape de pressage du tronçon de matière isolante sur le mandrin par des rouleaux.

La structure isolante est par exemple fabriquée par une machine apte à traiter toute matière présentant des caractéristiques isolantes, par exemple des fibres minérales. Ces fibres minérales sont amenées par tronçons au sein de la machine et s'enroulent autour du mandrin mis en rotation, par exemple via un arbre rotatif. Le mandrin est chauffé à une température d'environ 350-400°C afin de faire fondre la matière et d'augmenter la densité d'une portion de matière en contact direct avec le mandrin. Le mandrin présente des contreformes configurées pour former les excroissances de la structure isolante. Tout en s'enroulant autour du mandrin, le tronçon est pressé contre celui-ci par le biais des rouleaux. Ces rouleaux permettent ainsi de presser le tronçon contre les contreformes du mandrin afin de former les excroissances sur le produit final.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig. 1] est une vue en coupe de la structure isolante recouvrant une conduite, selon un mode de réalisation de l'invention ;
[fig. 2] est une vue en perspective de la structure isolante selon le même mode de réalisation que la figure 1 ;
[fig. 3] est une représentation d'un procédé de fabrication de la structure isolante en vue transversale ;
[fig. 4] est une vue en coupe d'un premier agencement de la structure isolante autour de la conduite métallique en vue d'un test d'isolation acoustique ;
[fig. 5] est une vue en coupe d'un deuxième agencement de la structure isolante autour de la conduite métallique en vue du même test d'isolation acoustique ;
[fig. 6] est une courbe de la perte d'insertion en fonction de la fréquence du son d'un premier modèle de structure isolante agencé autour de la conduite selon les figures 4 et 5 ;
[fig. 7] est une courbe de la perte d'insertion en fonction de la fréquence du son d'un deuxième modèle de structure isolante agencé autour de la conduite selon les figures 4 et 5 ;
[fig. 8] est une courbe de la perte d'insertion en fonction de la fréquence du son d'un troisième modèle de structure isolante agencé autour de la conduite selon les figures 4 et 5 ;
[fig. 9] est une courbe de la perte d'insertion en fonction de la fréquence du son d'un quatrième modèle de structure isolante agencé autour de la conduite selon les figures 4 et 5 ;
[fig. 10] est une courbe illustrant la perte d'insertion en fonction de la fréquence du son d'un cinquième modèle de structure isolante agencé autour de la conduite selon les figures 4 et 5.

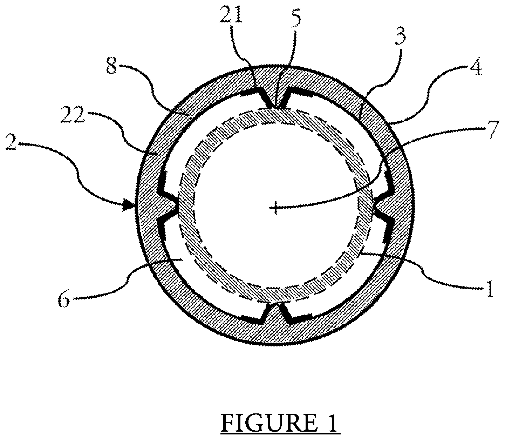

La figure 1 représente une coupe d'une conduite métallique 1, par exemple de forme circulaire, représentée ici en pointillés. La conduite 1 assure la circulation d'un fluide pouvant être de nature diverse, par exemple un liquide ou un gaz. La conduite 1 peut faire partie d'un système de conditionnement ou de refroidissement d'un fluide, ou de tout autre système susceptible de créer un phénomène de condensation au niveau de la conduite 1. Dans le cas d'un système de conditionnement ou de refroidissement, le fluide circulant dans la conduite 1 peut notamment être de l'eau ou de l'air. La conduite 1 peut être installée au sein de n'importe quel contenant comprenant un système au sein duquel une conduite assure la circulation d'un fluide plus froid que l'environnement extérieur, par exemple une construction terrestre telle qu'un bâtiment ou un véhicule tel qu'un bateau ou un avion.

La conduite 1 est entièrement recouverte par une structure isolante 2, de forme sensiblement identique à la forme de la conduite 1, par exemple de forme circulaire si la conduite 1 est également de forme circulaire. La conduite 1 et la structure isolante 2 sont centrées autour d'un axe de révolution 7. La structure isolante 2 est sectionnée et présente une ouverture 8, ménagée radialement selon un rayon de l'axe de révolution 7 et longitudinalement sur la longueur de la structure isolante 2. Cette dernière est enroulée autour de la conduite 1, puis est fixée par exemple par une bande adhésive, non représentée sur la figure 1.

La structure isolante 2 comprend une paroi interne 3 et une paroi externe 4 qui délimitent l'épaisseur de la structure isolante 2. L'ensemble de la structure isolante 2 est composée de laine de verre ou de laine de roche, selon le matériau choisi. La paroi externe 4 peut être couverte d'une fine couche de matériau assurant l'étanchéité de la structure isolante 2. La paroi externe 4 est ainsi avantageusement couverte d'une feuille en aluminium assurant l'étanchéité et/ou la protection de la structure isolante 2 face à l'environnement extérieur.

La paroi interne 3 de la structure isolante 2 est, dans cet exemple de réalisation, majoritairement circulaire, à l'exception d'excroissances 5, présentes de manière régulière et ponctuelle dans le volume interne délimité par la structure isolante 2.

Les excroissances 5 sont formées lors de la fabrication de la structure isolante 2 et correspondent aux contreformes d'un mandrin comprenant par exemple des contreformes permettant d'obtenir la structure isolante 2 telle que représentée dans la figure 1. Les excroissances 5 font donc partie intégrante de la paroi interne 3 du fait de la forme du mandrin avec lequel la structure isolante 2 a été extrudée lors du processus de fabrication décrit précédemment.

La paroi interne 3 délimite au moins partiellement l'excroissance 5. L'autre côté de l'excroissance 5 est délimité par un coeur 22 de la structure isolante 2. La paroi interne 3 de la structure isolante forme une peau 21 qui a été densifiée par échauffement durant le processus de fabrication de la structure isolante 2. Cette peau 21 densifiée peut se trouver exclusivement au niveau de l'excroissance 5, en fonction de la répartition de la chaleur exercée sur le mandrin lors de la fabrication de la structure isolante 2, tel que cela est illustré sur la figure 1. Alternativement, cette peau 21 densifiée peut également s'étendre sur une pluralité d'excroissances 5 et sur la paroi interne 3 située entre deux excroissances 5 consécutives.

Dans le mode de réalisation de la figure 1, les excroissances 5 sont au nombre de quatre, disposées selon un angle de 90° les unes par rapport aux autres, formant ainsi une disposition régulière des excroissances 5 le long de la paroi interne 3.

Dans ce mode de réalisation, les excroissances 5 présentent une forme d'ogive selon un plan de coupe de la structure isolante perpendiculaire à l'axe de révolution de cette structure.

Chaque sommet arrondi de l'excroissance 5 est en contact direct avec la conduite 1. Selon un plan transversal, les excroissances 5 sont de hauteur égale les unes par rapport aux autres. Autrement dit, la distance entre le point de contact du sommet arrondi de l'excroissance 5 avec la conduite 1 et une base de l'excroissance 5 au niveau de la paroi interne 3 est identique quelle que soit l'excroissance 5. Les excroissances 5 permettent ainsi la délimitation d'un espace d'air 6 entre la conduite 1 et la paroi interne 3, d'une épaisseur équivalente à la hauteur des excroissances 5.

L'ensemble formé par le coeur 22 et les excroissances 5 est en laine de verre ou en laine de roche selon le choix du matériau isolant, tout comme le reste de la structure isolante 2. Selon l'invention, le matériau isolant de la structure isolante 2 au niveau des excroissances 5, et avantageusement entre les excroissances, est densifié suite à la création de la structure isolante 2 par pressage sur le mandrin. Cette densification est due à un procédé particulier de chauffage du mandrin à une température avoisinant 350-400°C par le biais d'un faisceau de résistances chauffantes ou de micro-ondes. Les excroissances 5 densifiées sont donc plus denses que la paroi externe 4 de la structure isolante 2 et assurent donc un maintien de la structure isolante 2 autour de la conduite 1 sur le long terme.

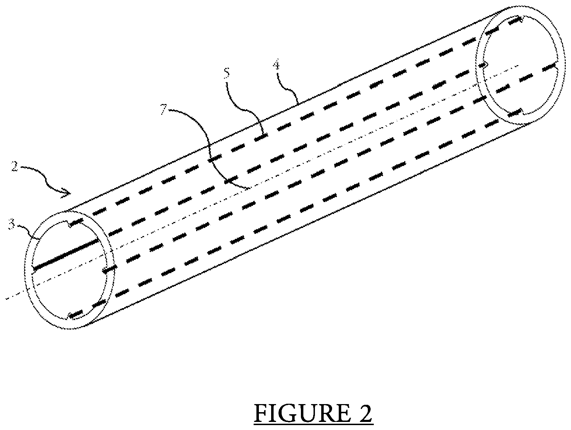

La figure 2 est une représentation en perspective de la structure isolante 2. Sur cette figure, plusieurs éléments sont représentés en traits pleins ou en pointillés et correspondent à différents éléments de la structure isolante 2.

La ligne en pointillés la plus fine correspond à l'axe de révolution 7. Tout comme pour la figure 1, la structure isolante 2 représentée sur la figure 2 est de forme circulaire. La représentation en perspective permet donc de visualiser la structure isolante 2 sous la forme d'un cylindre circulaire droit, centré autour de l'axe de révolution 7. Les deux lignes en traits pleins correspondent à deux points diamétralement opposés de la paroi externe 4 de la structure isolante 2, délimitant les dimensions externes de la structure isolante 2. Les lignes en train plein sont parallèles entre elles, définissant ainsi une structure isolante 2 de forme cylindrique constante selon une direction longitudinale. Enfin, les quatre lignes en pointillés forts correspondent aux excroissances 5. Le mode de réalisation de la structure isolante 2 représenté en figure 2 étant identique au mode de réalisation de la structure isolante 2 représenté en figure 1, les excroissances 5 sont au nombre de quatre, disposées selon un angle de 90° l'une par rapport à l'autre. La représentation en perspective de la figure 2 permet d'illustrer l'extension longitudinale des excroissances 5 sur toute la longueur de la paroi interne 3 de la structure isolante 2. Sur la figure 2, l'extension longitudinale des excroissances 5 est continue, mais il est tout à fait envisageable d'imaginer une extension longitudinale des excroissances 5 discontinue, tant que l'espace d'air 6 est maintenu sur toute la conduite lorsque la structure isolante 2 y est mis en place.

Les excroissances 5 conservent leur dimension de manière constante. Ainsi, l'espace d'air 6 est présent sur la totalité de la longueur de la conduite 1, ce qui garantit donc une protection contre la corrosion sur la totalité de la conduite 1, une circulation d'air entre les excroissances 5, et une isolation acoustique de la conduite tel que cela est décrit par la suite.

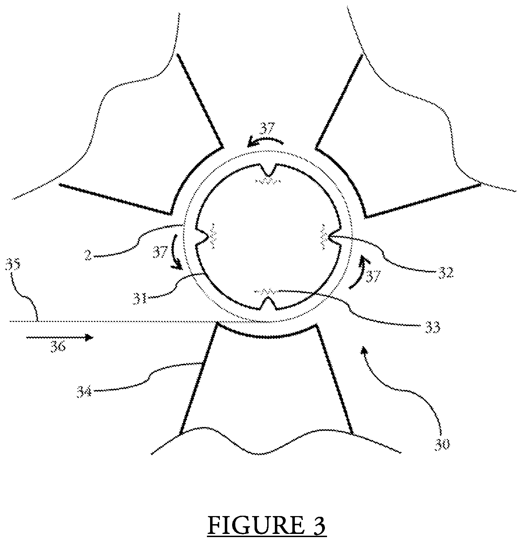

La figure 3 présente un procédé de fabrication de la structure isolante 2. Sur cette figure est représentée schématiquement une machine 30 apte à traiter des fibres minérales, par exemple de la laine de verre ou de la laine de roche, de manière à former des produits tels que la structure isolante 2. Le procédé de fabrication représentée sur la figure 3 permet de fabriquer la structure isolante 2 telle que représentée dans les figures précédentes.

La machine 30 comprend un mandrin 31 et des rouleaux 34. Le mandrin 31 est apte à être entraîné en rotation dans un sens 37, par exemple par le biais d'un arbre rotatif non représenté sur la figure. La machine 30 comprend également une arrivée d'un tronçon 35 de fibres minérales le long d'une direction 36, par exemple par le biais d'un convoyeur, non représenté sur la figure. Le tronçon 35 de fibres minérales est avantageusement de faible épaisseur afin de pouvoir obtenir des produits pouvant varier en termes d'épaisseur. Bien que cela ne soit pas visible sur la figure, il est évident que le tronçon 35 de fibres minérales et le mandrin 31 ont une dimension longitudinale conséquente, et ce afin de créer une structure isolante 2 de forme sensiblement cylindrique et d'une dimension longitudinale adaptée pour être disposée autour d'une conduite.

Lors de son arrivée dans la machine 30, le tronçon 35 s'enroule autour du mandrin 31 grâce à la mise en rotation de celui-ci selon le sens 37. Le mandrin 31 comprend des contreformes 32, représentées ici sous la forme de renfoncements, correspondantes aux excroissances de la structure isolante 2. Ces contreformes 32 peuvent par exemple être usinées directement dans le mandrin 31. Les contreformes 32, s'étendent de manière longitudinale le long du mandrin 31. Lorsque le tronçon 35 s'enroule autour du mandrin 31, les contreformes 32 sont comblées par les couches du tronçon 35, et ce grâce à la combinaison de la rotation du mandrin 31 et de la pression exercée par les rouleaux 34.

Les rouleaux 34 présentent des formes épousant la paroi externe de la structure isolante 2, et exercent une pression sur celle-ci, pression permettant le comblement des contreformes 32, mais également de lisser le tronçon 35 pour éviter l'apparition de défauts de fabrication, par exemple des plis.

Au départ du procédé de fabrication, les rouleaux 34 sont quasiment au contact du mandrin 31. Par la suite, plus le tronçon 35 s'enroule autour du mandrin 31, plus l'épaisseur de la structure isolante 2 augmente, et donc plus les rouleaux 34 s'éloignent du mandrin 31 tout en maintenant une certaine pression assurant leurs fonctions. La machine 30 peut ainsi créer une structure isolante 2 d'une épaisseur variable en fonction du besoin d'isolation, et correspondante au nombre d'enroulement du tronçon 35 autour du mandrin 31.

Tout en étant entraîné en rotation, le mandrin 31 est chauffé à 350-400°C par le biais, par exemple, de résistances électriques 33 situées au sein de la structure du mandrin 31, au droit des contreformes 32. Ce sont ces résistances électriques 33 qui, par leur fonction chauffante, assurent la densification de la paroi interne de la structure isolante 2 au niveau des excroissances. Par ailleurs, c'est la proximité entre les résistances électriques 33 et les contreformes 32 qui entraîne la densification de la paroi interne de la structure isolante 2 qui délimite au moins partiellement les excroissances, formant ainsi la peau densifiée. Le processus de chauffage par le biais des résistances 33 n'est nullement limitatif, la paroi interne pouvant être chauffée par micro-ondes orientées en direction des excroissances, par exemple.

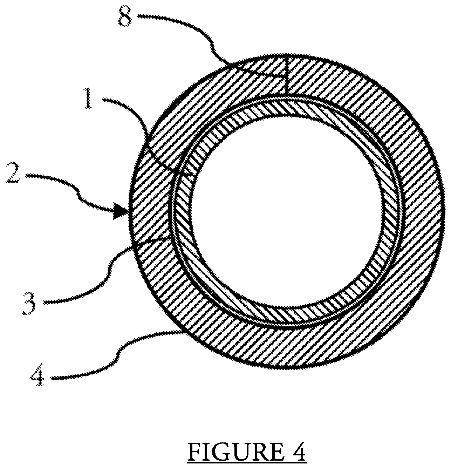

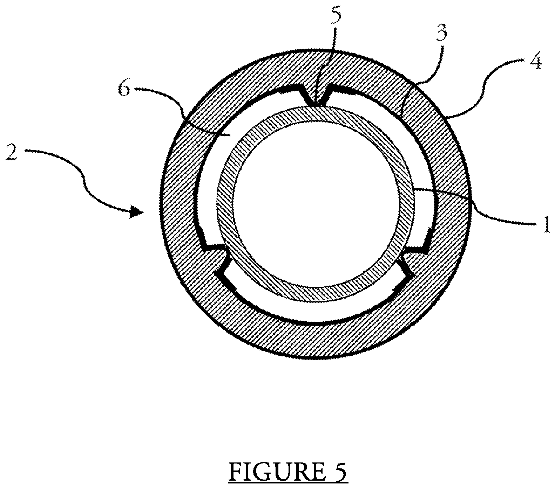

Les figures 4 et 5 sont des représentations schématiques en coupe de deux agencements de la structure isolante 2 autour de la conduite 1 en vue d'un test d'isolation acoustique. Le même test d'isolation acoustique est effectué sur quatre différents modèles de structure isolante 2, chacun selon les deux agencements présentés en figure 4 et 5.

La figure 4 présente un premier agencement pour le test d'isolation acoustique. Dans ce premier agencement, la structure isolante 2 est enroulée autour de la conduite 1 de sorte à ce que la grande majorité de la paroi interne 3 de la structure isolante 2 soit directement en contact avec la conduite 1. Les quatre modèles de la structure isolante 2 utilisés pour le test d'isolation acoustique présentent donc tous une dimension adaptée pour être enroulée autour de la conduite 1. La structure isolante 2 est ensuite maintenue autour de la conduite 1 par exemple grâce à de la matière adhésive.

La figure 5 présente un deuxième agencement pour le test d'isolation acoustique. Ce deuxième agencement correspond à la structure isolante 2 selon l'invention et comprend donc plusieurs excroissances 5 au niveau de la paroi interne 3 de la structure isolante 2.

Sur la figure 5, et contrairement à la figure 1, les excroissances 5 sont au nombre de trois, réparties de manière équilatérale le long de la paroi interne 3, et assurent donc la formation de l'espace d'air 6. Tout comme pour le premier agencement, la structure isolante 2 est ensuite maintenue sur la conduite 1 par de la matière adhésive.

Le test acoustique est effectué avec quatre modèle de structure isolante. Chacun des quatre modèles présente un diamètre interne de 114mm. Par diamètre interne, il faut comprendre que cela correspond à la longueur entre deux points de la paroi interne de la structure isolante diamétralement opposé l'un par rapport à l'autre lorsque la structure isolante est mise en place autour de la conduite. Les quatre modèles présentent le même diamètre interne étant donné qu'ils sont tous disposés autour de la même conduite pour effectuer le test d'isolation acoustique.

Un premier modèle A présente une épaisseur de matière isolante de 30mm et un poids linéaire de 1,0 kilogramme par mètre de longueur +/- 0,15 kilogrammes par mètre de longueur. Un deuxième modèle B présente également une épaisseur de matière isolante de 30mm et un poids linéaire de 1,2 kilogrammes par mètre de longueur +/- 0,15 kilogrammes par mètre de longueur. Un troisième modèle C présente une épaisseur de matière isolante de 60mm et un poids linéaire de 3,2 kilogrammes par mètre de longueur +/- 0,2 kilogrammes par mètre de longueur. Enfin, un quatrième modèle D présente une épaisseur de matière isolante de 100mm et un poids linéaire de 4,4 kilogrammes par mètre de longueur +/- 0,2 kilogrammes par mètre de longueur.

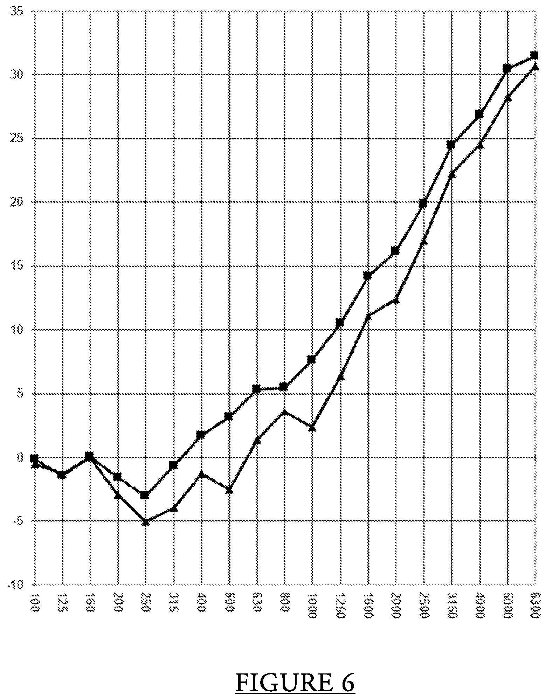

Chacun des modèles de structure isolante est enroulé tour à tour autour de la conduite, et ce selon chacun des deux agencements, une première fois selon le premier agencement présenté en figure 4, et une deuxième fois selon le deuxième agencement présenté en figure 5. Il y a donc deux mises en place par modèle, soit huit mises en place au total. Pour chaque mise en place de structure isolante, un bruit blanc, c'est-à-dire un bruit présentant un niveau sonore identique quelle que soit la fréquence dudit bruit, est envoyé par un haut-parleur à l'intérieur de la conduite métallique et un microphone situé à proximité de la conduite isolée capte ledit bruit. Le test est répété selon une plage de fréquence donnée. A partir du niveau sonore des fréquences captées par le microphone et en fonction du niveau sonore initial du son en sortie d'enceinte, une perte d'insertion en décibels est calculée. Plus la perte d'insertion est élevée, plus la structure isolante offre une isolation acoustique efficace. Les résultats des tests d'isolation acoustique sont présentés sur les figures 6 à 9.

Chacune des figures 6 à 9 présente un graphique comprenant deux courbes de perte d'insertion en fonction de la fréquence sonore, une figure correspondant à un modèle de structure isolante. Chacune des figures présente une courbe avec des marques triangulaires correspondant à la courbe des résultats du test d'isolation acoustique de la structure isolante agencée selon le premier agencement présenté en figure 4, et une courbe avec des marques carrées correspondant à la courbe des résultats du test d'isolation acoustique de la structure isolante agencée selon le deuxième agencement présenté en figure 5. La plage de fréquence sonore sélectionnée pour le test d'isolation acoustique présente dix-neuf fréquences sonores différentes variant entre 100Hz et 6300Hz.

La figure 6 est un graphique présentant les résultats du test d'isolation acoustique du premier modèle A selon les deux agencements présentés précédemment. Excepté pour les trois fréquences les plus basses où les pertes d'insertion sont identiques ou sensiblement identiques, la perte d'insertion lorsque le premier modèle A de structure isolante est agencé selon le deuxième agencement est systématiquement plus élevé que la perte d'insertion du premier modèle A est agencé selon le premier agencement, avec un différentiel de perte d'insertion pouvant aller jusqu'à plus de cinq décibels.

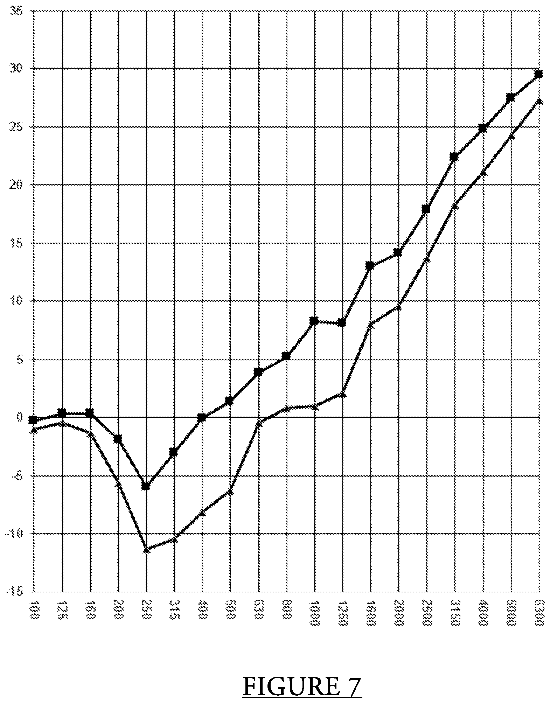

La figure 7 est un graphique issu du test d'isolation acoustique identique à la figure précédente, mais effectué avec le deuxième modèle B de structure isolante. Sur ce graphique, la perte d'insertion lorsque le deuxième modèle B est agencé selon le deuxième agencement est toujours plus élevée que lorsque le deuxième modèle B est agencé selon le premier agencement, avec un différentiel de perte d'insertion pouvant aller jusqu'à environ huit décibels.

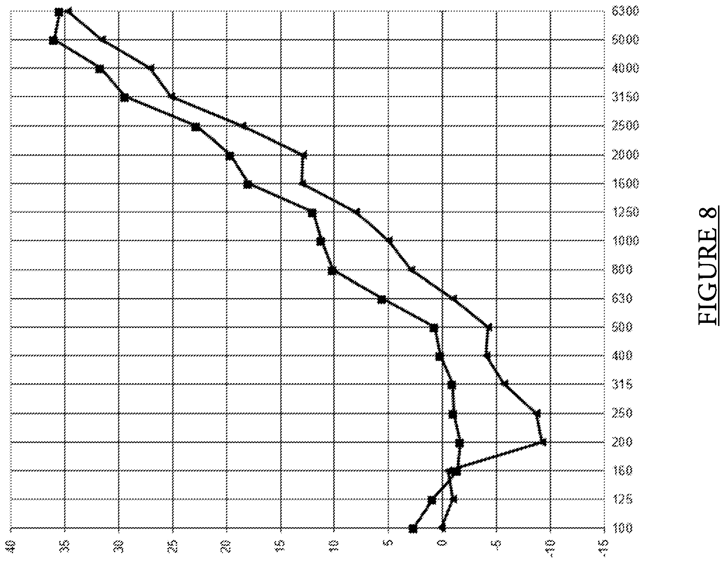

La figure 8 est un graphique présentant les résultats du test d'isolation acoustique avec le troisième modèle C de structure isolante. Excepté la mesure à 160Hz qui peut sembler négligeable par rapport à l'ensemble de la courbe, la perte d'insertion du troisième modèle C agencé selon le deuxième agencement est toujours plus élevée. Tout comme pour le deuxième modèle B de structure isolante, un différentiel de perte d'insertion pour le troisième modèle C peut également s'étendre jusqu'à environ huit décibels.

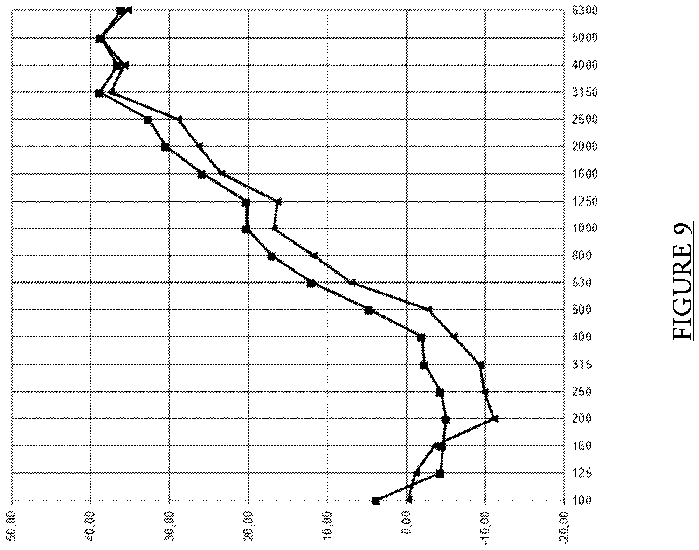

La figure 9 est un graphique présentant les résultats du test d'isolation acoustique avec le quatrième modèle D de structure isolante. Les résultats du quatrième modèle D présentent des mesures moins tendancieuses que pour les modèles de structure isolante précédents, notamment pour les fréquences très basses et les fréquences très hautes. Le résultat global demeure néanmoins en faveur du deuxième agencement où la perte d'insertion reste la plus élevée pour la plupart des fréquences sonores, avec un différentiel de perte d'insertion pouvant atteindre sept décibels.

D'une manière générale, la perte d'insertion est plus élevée lorsque les structures isolantes sont agencées selon le deuxième agencement, c'est-à dire avec la présence d'excroissances sur la paroi interne de la structure isolante assurant la création d'un espace d'air entre la conduite et la structure isolante, et ce malgré les différences de caractéristiques entre les quatre modèles de structure isolante, que ce soit l'épaisseur de la matière isolante ou le poids linéaire de celle-ci. La présence d'un tel espace d'air renforce donc l'isolation acoustique de la conduite, de manière au moins partiellement indépendante des propriétés de la structure isolante. Bien que le mode de réalisation du deuxième agencement diffère du mode de réalisation de l'invention présenté au travers de la description détaillée, la structure isolante selon l'invention permet également de former un espace d'air entre la conduite et la structure isolante par le biais des excroissances. L'invention présente donc une fonction d'isolant acoustique en plus de résoudre le problème technique lié à la corrosion de la conduite suite à la condensation de celle-ci.

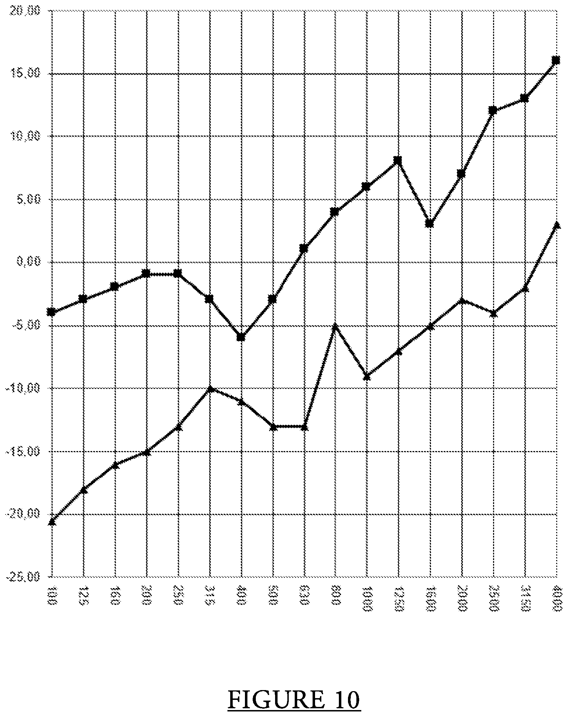

La figure 10 est un graphique présentant les résultats du test d'isolation acoustique tel qu'effectué précédemment. La laine minérale utilisée pour le test correspond à un cinquième modèle E, présentant une épaisseur de matière isolante de 30mm, à l'instar du premier modèle A et du deuxième modèle B. Le cinquième modèle E présente une masse volumique de 66kg/m³. Le cinquième modèle E est virtuellement enroulé autour d'une conduite, et est virtuellement parcouru par plusieurs bruits blancs à différentes fréquences. Les deux agencements du cinquième modèle E sont similaires aux agencements présentés en figure 4 et 5.

Le test acoustique effectué ici est identique à celui mentionné lors de la description des figures 6 à 9. La plage de fréquence utilisée est située entre 100 Hz et 4000 Hz et est appliqué sur le cinquième modèle E selon le premier agencement et selon le deuxième agencement. La perte d'insertion en décibels est mesurée pour chaque fréquence et les résultats sont présentés en figure 10. Il est possible de constater que le différentiel de perte d'insertion est en faveur du deuxième agencement, avec un différentiel allant de 5 décibels et jusqu'à 15 décibels. Le test acoustique est donc également concluant. L'invention ne se limite pas à cet exemple de réalisation. Il est évidemment possible de choisir la matière isolante en fonction des besoins. Il est également possible de faire varier la hauteur des excroissances 5 en fonction du diamètre de la structure isolante 2, ou tout simplement afin de créer un espace d'air 6 plus volumineux, si cela est nécessaire.

Le nombre et la forme vue en coupe des excroissances 5 peuvent également varier, et ce en fonction de la forme du mandrin sur lequel est formé la structure isolante 2. L'augmentation du nombre d'excroissances 5 assure une meilleure stabilité de la structure isolante 2 autour de la conduite 1 mais diminue le volume global de l'espace d'air 6. Les modes de réalisation décrits ci-dessus ne sont ainsi nullement limitatifs ; on pourra notamment imaginer des variantes de l'invention ne comprenant qu'une sélection de caractéristiques décrites par la suite isolées des autres caractéristiques mentionnées dans ce document, si cette sélection de caractéristiques est suffisante pour conférer un avantage technique ou pour différencier l'invention par rapport à l'état de la technique antérieur.

## Revendications

1. Structure thermiquement et acoustiquement isolante (2) cylindrique configurée pour couvrir une conduite (1) de transport d'un fluide susceptible d'être porté à des températures variables, comprenant une paroi interne (3) et une paroi externe (4), ladite structure isolante (2) comprenant au moins une excroissance (5) qui émerge de sa paroi interne (3) de sorte à générer un espace d'air (6) entre la paroi interne (3) et la conduite (1), la paroi interne (3) de la structure isolante (2) qui délimite au moins partiellement l'excroissance (5) étant plus dense que la paroi externe (4) de la structure isolante (2), **caractérisée par** une densification de l'excroissance (5) issue de la paroi interne (3) assurant une résistance augmentée à la déformation de l'excroissance (5) et permettant ainsi la conservation de l'espace d'air (6) entre la conduite (1) et la structure isolante (2).

2. Structure isolante (2) selon la revendication 1, comprenant au moins deux excroissances (5).

3. Structure isolante (2) selon l'une quelconque des revendications précédentes, dans laquelle une épaisseur de la paroi interne mesurée au niveau de l'excroissance (5) est comprise entre 0,1 mm et 5 mm.

4. Structure isolante (2) selon l'une quelconque des revendications précédentes, dans laquelle la densité de la paroi externe (4) de la structure isolante (2) est d'une valeur relative comprise entre 40% et 70% de la valeur de la densité de la paroi interne (4) de la structure isolante (2) au niveau de l'excroissance (5).

5. Structure isolante (2) selon l'une quelconque des revendications précédentes, dans laquelle la matière isolante qui la compose est de la laine minérale.

6. Structure isolante (2) selon l'une quelconque des revendications précédentes, dans laquelle l'excroissance (5) qui émerge de la paroi interne (3) est bombée en direction de l'axe de révolution (7) du cylindre formé par la structure isolante (2).

7. Structure isolante (2) selon l'une quelconque des revendications précédentes, comprenant une pluralité d'excroissances (5) qui émergent de la paroi interne (3), les excroissances (5) étant réparties angulairement de manière régulière.

8. Structure isolante (2) selon l'une quelconque des revendications précédentes, dans laquelle la paroi externe (4) est recouverte d'une couche d'un matériau étanche.

9. Structure isolante (2) selon la revendication précédente, dans laquelle la couche de matériau étanche de la paroi externe (4) est une feuille métallique.

10. Procédé de fabrication d'une structure thermiquement et acoustiquement isolante (2) selon l'une quelconque des revendications précédentes, comprenant :
- une étape d'enroulement d'un tronçon (35) de matière isolante autour d'un mandrin (31) présentant des contreformes (32),
- une étape de chauffage de la matière par le mandrin (32),
- une étape de pressage du tronçon (35) de matière isolante sur le mandrin (31) par des rouleaux (34).

## Patentansprüche

1. Eine zylindrische thermisch und akustisch isolierende Struktur (2), die so konfiguriert ist, dass sie ein Rohr (1) zum Transport eines Fluids abdeckt, das auf variable Temperaturen gebracht werden kann, einschließlich einer Innenwand (3) und einer Außenwand (4), wobei die Isolierstruktur (2) mit mindestens einem Vorsprung (5), der aus seiner Innenwand (3) hervorsteht, um so einen Luftraum (6) zwischen der Innenwand (3) und dem Rohr (1) zu erzeugen, wobei die Innenwand (3) von die isolierende Struktur (2), die den Vorsprung (5) zumindest teilweise begrenzt, dichter ist als die Außenwand (4) der isolierenden Struktur (2), **dadurch gekennzeichnet, dass** eine Verdichtung des Vorsprungs (5) ausgehend von der Innenwand ( 3) Versehen des Vorsprungs (5) mit einem erhöhten Widerstand gegen Verformung und Ermöglichen der Erhaltung des Luftraums (6) zwischen dem Rohr (1) und der Isolierstruktur (2).

2. Isolierstruktur (2) nach Anspruch 1, umfassend mindestens zwei Vorsprünge (5).

3. Isolierstruktur (2) nach einem der vorhergehenden Ansprüche, bei der eine am Vorsprung (5) gemessene Dicke der Innenwand zwischen 0,1 mm und 5 mm beträgt.

4. Isolierstruktur (2) nach einem der vorhergehenden Ansprüche, bei der die Dichte der Außenwand (4) der Isolierstruktur (2) einen relativen Wert zwischen 40 % und 70 % des Wertes aufweist Dichte der Innenwand (3) der Isolierstruktur (2) am Vorsprung (5).

5. Isolierstruktur (2) nach einem der vorhergehenden Ansprüche, bei der das Isoliermaterial, aus dem sie besteht, Mineralwolle ist.

6. Isolierstruktur (2) nach einem der vorhergehenden Ansprüche, bei der der aus der Innenwand (3) hervortretende Vorsprung (5) in Richtung der Rotationsachse (7) des durch sie gebildeten Zylinders gekrümmt ist die isolierende Struktur (2).

7. Isolierstruktur (2) nach einem der vorhergehenden Ansprüche, umfassend eine Vielzahl von Vorsprüngen (5), die aus der Innenwand (3) herausragen, wobei die Vorsprünge (5) regelmäßig winkelmäßig verteilt sind.

8. Die isolierende Struktur (2) nach einem der vorstehenden Ansprüche, bei der die Außenwand (4) mit einer Schicht aus leckagefreiem Material bedeckt ist.

9. Isolierstruktur (2) nach dem vorhergehenden Anspruch, bei der die Schicht aus leckagefreiem Material der Außenwand (4) eine Metallfolie ist.

10. Verfahren zur Herstellung einer thermisch und akustisch isolierenden Struktur (2) nach einem der vorhergehenden Ansprüche, einschließlich:
- einen Schritt des Wickelns eines Abschnitts (35) aus Isoliermaterial um einen Dorn (31) mit Gegenformen (32),
- einen Schritt des Erhitzens des Materials mittels des Dorns (32),
- einen Schritt des Pressens des Abschnitts (35) aus Isoliermaterial auf den Dorn (31) mittels Rollen (34).

## Claims

1. A cylindrical thermally and acoustically insulating structure (2) configured to cover a pipe (1) for transporting a fluid capable of being brought to variable temperatures, comprising an inner wall (3) and an outer wall (4), said insulating structure (2) comprising at least one protrusion (5) which emerges from its inner wall (3) so as to generate an air space (6) between the inner wall (3) and the pipe (1), the inner wall (3) of the insulating structure (2), which at least partially delimits the protrusion (5), being denser than the outer wall (4) of the insulating structure (2), **characterized in that** a densification of the protrusion (5) emanating from the inner wall (3) providing the protrusion (5) with an increased resistance to deformation and allowing conservation of said air space (6) between the pipe (1) and the insulating structure (2).

2. The insulating structure (2) as claimed in claim 1, comprising at least two protrusions (5).

3. The insulating structure (2) as claimed in either one of the preceding claims, in which a thickness of the inner wall measured at the protrusion (5) is between 0.1 mm and 5 mm.

4. The insulating structure (2) as claimed in any one of the preceding claims, in which the density of the outer wall (4) of the insulating structure (2) has a relative value of between 40% and 70% of the value of the density of the inner wall (3) of the insulating structure (2) at the protrusion (5).

5. The insulating structure (2) as claimed in any one of the preceding claims, in which the insulating material which composes it is mineral wool.

6. The insulating structure (2) as claimed in any one of the preceding claims, in which the protrusion (5) which emerges from the inner wall (3) is curved in the direction of the axis of revolution (7) of the cylinder formed by the insulating structure (2).

7. The insulating structure (2) as claimed in any one of the preceding claims, comprising a plurality of protrusions (5) which emerge from the inner wall (3), the protrusions (5) being angularly distributed in a regular manner.

8. The insulating structure (2) as claimed in any one of the preceding claims, in which the outer wall (4) is covered with a layer of leak tight material.

9. The insulating structure (2) as claimed in the preceding claim, in which the layer of leak tight material of the outer wall (4) is a metal foil.

10. A method for manufacturing a thermally and acoustically insulating structure (2) as claimed in any one of the preceding claims, comprising :
- a step of winding a portion (35) of insulating material around a mandrel (31) having counter-shapes (32),
- a step of heating the material by means of the mandrel (32),
- a step of pressing the portion (35) of insulating material onto the mandrel (31) by means of rollers (34).
